(19) Europäisches Patentamt
European Patent Office
Office européen des brevets

(11) **EP 3 691 369 A1**

(12) **EUROPEAN PATENT APPLICATION**
published in accordance with Art. 153(4) EPC

(43) Date of publication:
**05.08.2020 Bulletin 2020/32**

(51) Int Cl.:
**H04W 72/04** (2009.01)

(21) Application number: **17929963.1**

(22) Date of filing: **24.10.2017**

(86) International application number:
**PCT/CN2017/107541**

(87) International publication number:
**WO 2019/079975 (02.05.2019 Gazette 2019/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Huawei Technologies Co., Ltd.**
**Longgang District**
**Shenzhen, Guangdong 518129 (CN)**

(72) Inventors:
• **LI, Zhenyu**
**Shenzhen**
**Guangdong 518129 (CN)**
• **HAN, Jinxia**
**Shenzhen**
**Guangdong 518129 (CN)**
• **NAN, Yang**
**Shenzhen**
**Guangdong 518129 (CN)**
• **ZHANG, Wurong**
**Shenzhen**
**Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(54) **MESSAGE TRANSMISSION METHOD AND DEVICE**

(57)     A message transmission method and apparatus are provided. The method includes: determining, by a base station in a first sending cycle, a first time unit for sending a first message, where the sending cycle includes one of the following cycles: a paging cycle or a broadcast cycle, the first message includes one of the following messages: a paging message or a broadcast message, and the time unit includes one of the following time units: one or more subframes, or one or more slots; when determining, before a start location of the first time unit, that a CCA fails, determining a second time unit(s) for sending the first message; and sending the first message to a terminal device in one or more second time units for sending the first message that are after the first time unit for sending the first message. When it is determined, before the start location of the first time unit, that the CCA fails, the first message is sent in the second time unit(s) in the first sending cycle, so that a success rate for sending the first message can be increased.

FIG. 4

**Description**

**TECHNICAL FIELD**

This application relates to the field of internet of things communications technologies, and in particular, to a message transmission method and apparatus.

**BACKGROUND**

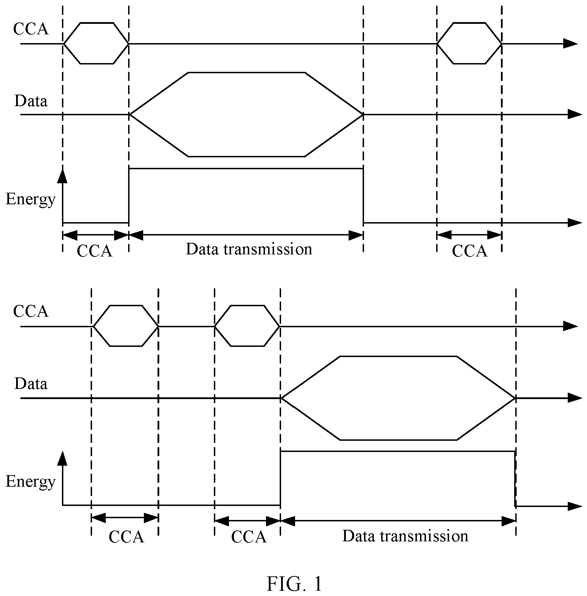

On an unlicensed spectrum, to reduce interference between transmitters, a channel usage status usually needs to be assessed before a device performs sending. A clear channel assessment (clear channel assessment, CCA) technology is a common channel assessment technology. A technical principle may be shown in FIG. 1. Before sending data, a device first performs clear channel assessment. A common assessment technology is described as follows: A transmitter measures energy on a current channel. If the measured energy exceeds a threshold, it is considered that the channel is occupied, and in this case, no data can be sent. Contrarily, if the measured energy is lower than the threshold, it is considered that the channel is clear, and in this case, data may be sent. This implements channel preemption between devices through time division multiplexing, thereby avoiding mutual interference caused by simultaneous data sending.

An enhanced machine type communication on unlicensed spectrum (enhanced machine type communication on unlicensed spectrum, eMTC-U) service is a machine type communication technology operating on an unlicensed spectrum. eMTC-U is mainly intended to implement long-distance, low-cost, and low-power internet of things communication. Non-adaptive frequency hopping is used for uplink sending in eMTC-U. A main operating frequency is 2.4 GHz, or may be extended onto another unlicensed spectrum. Frequency hopping or a broadband technology is used in downlink. To reduce synchronization time and power consumption, a primary synchronization signal (primary synchronization signal, PSS), a secondary synchronization signal (secondary synchronization signal, SSS), and a system message in eMTC-U need to be sent on one or more fixed-frequency channels. A CCA is performed on a data channel in eMTC-U before data sending. If the CCA succeeds, data sending is performed; otherwise, a CCA continues to be performed in a CCA time window until a CCA succeeds, and then data sending is performed. If a channel detection result in the CCA time window is that the channel is always occupied, a transmitter performs channel preemption again in a next CCA moment or CCA cycle.

In a process of communicating with a terminal (user equipment, UE), a base station needs to send a paging message and/or system information to the terminal. For a paging message, all terminals served by a same base station have their own paging cycles, and the paging cycles of the terminals may be the same or different. For each piece of system information, all terminals served by a same base station are corresponding to a same system information cycle. Because a base station needs to perform a CCA before sending data, if the CCA fails, a paging message and/or system information cannot be sent in a timely manner.

**SUMMARY**

Embodiments of this application provide a message transmission method and apparatus, to increase a message sending success rate when a CCA fails.

According to a first aspect, an embodiment of this application provides a communication method. The method includes:
determining, in a first sending cycle, a first time unit for sending a first message, where the sending cycle includes one of the following cycles: a paging cycle or a broadcast cycle, the first message includes one of the following messages: a paging message or a broadcast message, and the time unit includes one of the following time units: one or more subframes, or one or more slots; when determining, before a start location of the first time unit, that a CCA fails, determining a second time unit(s) for sending the first message; and sending the first message to a terminal device in one or more second time units for sending the first message that are after the first time unit for sending the first message.

In the solution of this application, when it is determined, before the start location of the first time unit, that the CCA fails, the first message is sent in the second time unit(s) in the first sending cycle, so that a success rate for sending the first message can be increased.

In a possible design, the first message is the paging message, and the sending the first message to a terminal device in one or more second time units for sending the first message that are after the first time unit for sending the first message includes: when determining that the one or more second time units for sending the paging message that are after the first time unit for sending the paging message are a first time unit for sending a paging message to a first device, sending the paging messages to the terminal device and the first device in the one or more second time units for sending the paging message, where the first device is a device, other than the terminal device, that is connected to a base station.

In the solution of this application, when the first message is the paging message and the paging message needs to be sent to a plurality of terminal devices in the second time unit(s), first messages are simultaneously sent in the second time unit(s). This ensures that the first message can be sent in a timely manner, and increases a success rate for sending the first message without impact on sending the paging message to the first device.

In a possible design, the first message is the paging message, and the sending the first message to a terminal device in one or more second time units for sending the first message that are after the first time unit for sending the first message includes: when determining that the one or more second time units for sending the paging message that are after the first time unit for sending the paging message are a first time unit for sending a paging message to a first device, sending the paging message to the first device in the one or more second time units for sending the paging message, and sending the paging message to the terminal device in a preset time period after the one or more second time units for sending the paging message, where the first device is a device, other than the terminal device, that is connected to a base station.

In the solution of this application, when the first message is the paging message and the paging message needs to be sent to a plurality of terminal devices in the second time unit(s), the paging message is sent to the terminal device in a preset time unit after the second time unit(s). This avoids a case in which sending the paging message to the terminal device fails due to insufficient resources in a subframe corresponding to the second time unit(s), thereby further increasing a success rate for sending the paging message to the terminal device without impact on sending the paging message to the first device.

In a possible design, the first message is a broadcast message, the broadcast message includes a first broadcast message and a second broadcast message, and the first broadcast message and the second broadcast message are corresponding to different broadcast cycles. The sending the first broadcast message to a terminal device in one or more second time units for sending the first broadcast message that are after the first time unit for sending the first broadcast message includes: when determining that the one or more second time units for sending the first broadcast message that are after the first time unit for sending the first broadcast message are a first time unit for sending the second broadcast message, sending the first broadcast message and the second broadcast message to the terminal device in the one or more second time units for sending the first broadcast message.

In the solution of this application, when the first message is a broadcast message, the broadcast message is classified into the first broadcast message and the second broadcast message, and a plurality of broadcast messages need to be sent in the second time unit(s), the first broadcast message and the second broadcast message are simultaneously sent in the second time unit(s). This ensures that the first broadcast message can be sent in a timely manner, and increases a success rate for sending the first broadcast message to the terminal device without impact on sending the second broadcast message.

In a possible design, the first message is a broadcast message, the broadcast message includes a first broadcast message and a second broadcast message, and the first broadcast message and the second broadcast message are corresponding to different cycles. The sending the first broadcast message to the terminal device in one or more second time units for sending the first broadcast message that are after the first time unit for sending the first broadcast message includes: when determining that the one or more second time units for sending the first broadcast message that are after the first time unit for sending the first broadcast message are a first time unit for sending the second broadcast message, sending the second broadcast message in the one or more second time units for sending the first broadcast message, and sending the first broadcast message to the terminal device in a preset time period after the one or more second time units for sending the first broadcast message.

In the solution of this application, when the first message is a broadcast message, the broadcast message is classified into the first broadcast message and the second broadcast message, and a plurality of broadcast messages need to be sent in the second time unit(s), a case in which sending the first broadcast message to the terminal device fails due to insufficient resources in a subframe corresponding to the second time unit(s) is avoided, thereby further increasing a success rate for sending the first broadcast message to the terminal device without impact on sending the second broadcast message.

In a possible design, the method further includes: when determining, before the start location of the first time unit for sending the first message, that the CCA succeeds, stopping, in the first sending cycle, sending the first message to the terminal device in the second time unit(s) for sending the first message; or when determining, before a start location of the one or more second time units for sending the first message, that a CCA succeeds, after the first message is sent in a current second time unit, stopping, in the first sending cycle, sending the first message to the terminal device in one or more second time units after the current time unit; or when determining, before a start location of the one or more second time units for sending the first message, that a CCA fails, continuing, in the first sending cycle, to perform a CCA before a start location of one or more second time units after a current second time unit until a CCA succeeds, and then in the first sending cycle, after the first message is sent in a second time unit in which it is determined that the CCA succeeds, stopping sending the first message to the terminal device in one or more second time units after the second time unit in which it is determined that the CCA succeeds.

In the solution of this application, once it is determined that a CCA succeeds, the first message may no longer be sent in a subsequent second time unit(s), so that system overheads can be reduced.

In a possible design, the method further includes: when determining, before a start location of all of the one or more second time units for sending the first message, that a CCA fails, stopping sending the first message to the terminal device in the first sending cycle.

In the solution of this application, when it is determined that CCAs fail in all second time units in the first sending cycle, the first message may no longer be sent in the first sending cycle, so that system overheads can be reduced, and the terminal is prevented from infinitely detecting the first message in the current cycle.

According to a second aspect, an embodiment of this application provides a message transmission method, and the method includes:

determining, in a first sending cycle, a first time unit for sending a first message, where the sending cycle includes one of the following cycles: a paging cycle or a broadcast cycle, the first message includes one of the following messages: a paging message or a broadcast message, and the time unit includes one of the following time units: one or more subframes, or one or more slots; when detecting, before a start location of the first time unit for sending the first message, that a CCA fails, determining a second time unit(s) for sending the first message; and receiving, in one or more second time units for sending the first message that are after the first time unit for sending the first message, the first message sent by a base station.

In a possible design, the first message is the paging message. The receiving, in one or more second time units for sending the first message that are after the first time unit for sending the first message, the first message sent by the base station includes: receiving, in a preset time period after the one or more second time units for sending the first message, the first message sent by the base station.

In a possible design, the first message is a broadcast message, the broadcast message includes a first broadcast message and a second broadcast message, and the first broadcast message and the second broadcast message are corresponding to different broadcast cycles. The receiving, in one or more second time units for sending the first message that are after the first time unit for sending the first message, the first message sent by the base station includes: receiving, in a preset time period after one or more second time units for sending the first broadcast message, the first broadcast message sent by the base station.

In a possible design, the preset time period is associated with a quantity of times of extended sending of the first message.

In the solution of this application, the preset time period is associated with the quantity of times of extended sending of the first message. This can prevent the base station from configuring a parameter related to the preset time period, thereby reducing signaling overheads.

In a possible design, the method further includes: when detecting, before the start location of the first time unit for sending the first message, that a CCA succeeds, stopping, in the first sending cycle, receiving, in the second time unit(s) for sending the first message, the first message sent by the base station; or when detecting, before a start location of the one or more second time units for sending the first message, that a CCA succeeds, after the first message is received in a current second time unit, stopping, in the first sending cycle, receiving, in one or more second time units after the current second time unit, the first message sent by the base station; or when detecting, before a start location of the one or more second time units for sending the first message, that a CCA fails, continuing, in the first sending cycle, to perform CCA detection before a start location of one or more second time units after a current second time unit until a CCA success is detected, and in the first sending cycle, after the first message is received in a second time unit in which the CCA success is detected, stopping receiving, in one or more second time units after the second time unit in which the CCA success is detected, the first message sent by the base station.

In a possible design, the method further includes: when detecting, before a start location of all of the one or more second time units for sending the first message, that a CCA fails, stopping, in the first sending cycle, receiving the first message sent by the base station.

In a possible design, the receiving, by a terminal device, the first message sent by the base station includes: determining, by detecting a scrambled physical downlink control channel (physical downlink control channel, PDCCH), whether the base station successfully sends the first message, where the scrambled PDCCH includes one of the following: a PDCCH scrambled by a system information radio-network temporary identifier (system information-radio network temporary identity, SI-RNTI) or a PDCCH scrambled by a paging message radio network temporary identifier (paging-radio network temporary identity, P-RNTI).

In the solution of this application, whether the base station successfully sends the first message is determined by detecting the scrambled physical downlink control channel (physical downlink control channel, PDCCH). This can prevent the base station from sending an existence detection sequence, and whether a CCA on the base station side succeeds does not need to be explicitly indicated to the terminal, thereby avoiding system overheads.

In a possible design, the second time unit(s) for sending the first message is a time unit that is after the first time unit for sending the first message and that is determined based on the quantity of times of extended sending of the first message and a preset time interval, and the preset time interval is a time interval between the first time unit and the second time unit(s) and/or a time interval between the second time units.

In a possible design, the quantity of times of extended sending of the first message is a quantity of times that is agreed on by the base station and the terminal device, or is sent by the base station to the terminal device.

In the solution of this application, when the quantity of times of extended sending of the first message is the quantity of times that is agreed on by the base station and the terminal device, the base station can be prevented from configuring a quantity of extensions of second time units through signaling, thereby reducing signaling overheads; or when the quantity of times of extended sending of the first message is sent by the base station to the terminal device, system flexibility can be improved.

According to a third aspect, an embodiment of this application provides a message transmission apparatus. The apparatus may be a base station, or may be a chip in a base station. The apparatus has functions of implementing various embodiments of the first aspect. The functions may be implemented by hardware, or may be implemented by hardware executing corresponding software. The hardware or the software includes one or more modules corresponding to the foregoing functions.

In a possible design, when the apparatus is a base station, the base station includes a processing unit and a communications unit. The processing unit may be, for example, a processor, the communications unit may be, for example, a transceiver, and the transceiver includes a radio frequency circuit. Optionally, the base station further includes a storage unit. The storage unit may be, for example, a memory. When the base station includes the storage unit, the storage unit stores a computer-executable instruction. The processing unit is connected to the storage unit. The processing unit executes the computer-executable instruction stored in the storage unit, to enable the terminal device to perform the message transmission method in any design of the first aspect.

In another possible design, when the apparatus is a chip in a base station, the chip includes a processing unit and a communications unit. The processing unit may be, for example, a processor. The communications unit may be, for example, an input/output interface, a pin, or a circuit. The processing unit may execute a computer-executable instruction stored in a storage unit, to enable the message transmission method in any design of the first aspect to be performed. Optionally, the storage unit is a storage unit in the chip, for example, a register or a cache; or the storage unit may be a storage unit located outside the chip in the base station, for example, a read-only memory (read-only memory, ROM) or other types of static storage devices capable of storing static information and instructions, or a random access memory (random access memory, RAM).

The processor mentioned anywhere above may be a general-purpose central processing unit (central processing unit, CPU), a microprocessor, an application-specific integrated circuit (application-specific integrated circuit, ASIC), or one or more integrated circuits for controlling program execution of the message transmission method in the first aspect.

According to a fourth aspect, an embodiment of this application provides a message transmission apparatus. The apparatus may be a terminal device, or may be a chip in a terminal device. The apparatus has functions of implementing various embodiments of the second aspect. The functions may be implemented by hardware, or may be implemented by hardware executing corresponding software. The hardware or the software includes one or more modules corresponding to the foregoing functions.

In a possible design, when the apparatus is a terminal device, the terminal device includes a processing unit and a communications unit. The processing unit may be, for example, a processor, the communications unit may be, for example, a transceiver, and the transceiver includes a radio frequency circuit. Optionally, the terminal device further includes a storage unit. The storage unit may be, for example, a memory. When the terminal device includes the storage unit, the storage unit stores a computer-executable instruction. The processing unit is connected to the storage unit. The processing unit executes the computer-executable instruction stored in the storage unit, to enable the terminal device to perform the message transmission method in any design of the second aspect.

In another possible design, when the apparatus is a chip in a terminal device, the chip includes a processing unit and a communications unit. The processing unit may be, for example, a processor. The communications unit may be, for example, an input/output interface, a pin, or a circuit. The processing unit may execute a computer-executable instruction stored in a storage unit, to enable the message transmission method in any design of the second aspect to be performed. Optionally, the storage unit is a storage unit in the chip, for example, a register or a buffer; or the storage unit may be a storage unit located outside the chip in the terminal device, for example, a read-only memory, other types of static storage devices capable of storing static information and instructions, or a random access memory.

The processor mentioned anywhere above may be a general-purpose central processing unit, a microprocessor, an application-specific integrated circuit, or one or more integrated circuits for controlling program execution of the message transmission method in the second aspect.

According to a fifth aspect, an embodiment of this application further provides a computer-readable storage medium. The computer-readable storage medium stores an instruction, and when the instruction is run on a computer, the computer is enabled to perform the method in the foregoing aspects.

According to a sixth aspect, an embodiment of this application further provides a computer program product including an instruction. When the computer program product is run on a computer, the computer is enabled to perform the method in the foregoing aspects.

In addition, for technical effects brought by any design in the second aspect to the sixth aspect, refer to technical effects brought by different designs in the first aspect. Details are not described herein again.

These aspects or other aspects in the embodiments of this application are clearer and more comprehensible in descriptions of the following embodiments.

**BRIEF DESCRIPTION OF DRAWINGS**

FIG. 1 is a schematic diagram of a CCA of a base station according to an embodiment of this application;

FIG. 2 is a schematic structural diagram of a network communications system according to an embodiment of this application;

FIG. 3 is a schematic diagram of a frame structure according to an embodiment of this application;

FIG. 4 is a schematic flowchart of a message transmission method according to an embodiment of this application;

FIG. 5 is a schematic diagram of a frame structure according to an embodiment of this application;

FIG. 6 is a schematic diagram of a frame structure according to an embodiment of this application;

FIG. 7 is a schematic diagram of a frame structure according to an embodiment of this application;

FIG. 8 is a schematic structural diagram of a message transmission apparatus according to an embodiment of this application;

FIG. 9 is a schematic structural diagram of a message transmission apparatus according to an embodiment of this application;

FIG. 10 is a schematic structural diagram of a message transmission apparatus according to an embodiment of this application; and

FIG. 11 is a schematic structural diagram of a message transmission apparatus according to an embodiment of this application.

**DESCRIPTION OF EMBODIMENTS**

The following clearly and completely describes the technical solutions in the embodiments of this application with reference to the accompanying drawings in the embodiments of this application.

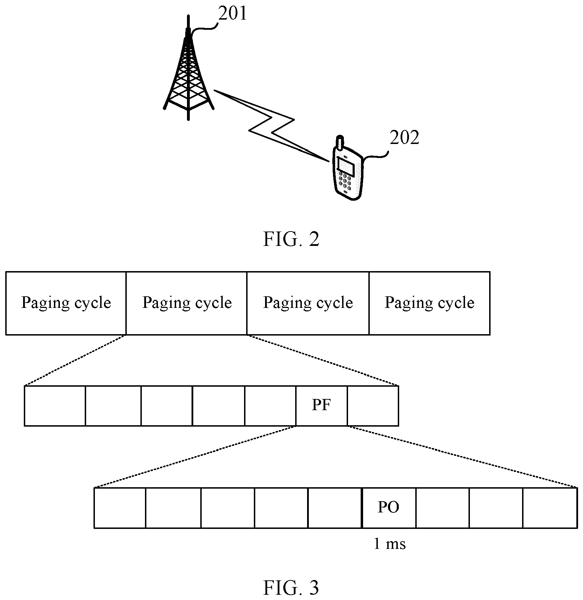

The embodiments of this application provide a message transmission method. The method may be applied to a communications network system. FIG. 2 is a structural diagram of a possible communications network system according to an embodiment of this application. As shown in FIG. 1, the communications network system includes a base station 201 and a terminal device 202. The base station 201 and the terminal device 202 may communicate with each other through an air interface protocol.

The base station mentioned in this specification is a device that connects a terminal to a radio network, including but not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved nodeB, or a home node B, HNB), a baseband unit (baseband unit, BBU), a gNodeB (g nodeB, gNB), a transmitting and receiving point (transmitting and receiving point, TRP), a transmitting point (transmitting point, TP), a mobile switching center, and the like. In addition, the base station may further include a Wi-Fi access point (access point, AP) and the like.

The terminal device mentioned in this specification may be a device with a wireless sending/receiving function; and may be deployed on land, including an indoor, outdoor, handheld, wearable, or in-vehicle scenario, or may be deployed on water (for example, on a steamship), or may be deployed in the air (for example, on an airplane, a balloon, or a satellite). The terminal device may be a mobile phone (mobile phone), an internet of things (IoT) terminal device, a tablet computer (Pad), a computer with a wireless sending/receiving function, a virtual reality (virtual Reality, VR) terminal device, an augmented reality (augmented Reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in the embodiments of this application. Sometimes, the terminal device may also be referred to as user equipment (user equipment, UE), an access terminal device, a UE unit, a UE station, a mobile station, a mobile console, a remote station, a remote terminal device, a mobile device, a UE terminal device, a terminal device, a wireless communications device, a UE agent, a UE apparatus, or the like. The terminal device may further include a relay node.

In other words, all devices that can perform data communication with a base station may be used as the terminal device in the embodiments of this application. For ease of description, the UE may be used for description.

A schematic diagram of paging in a long term evolution (long term evolution, LTE) system may be shown in FIG. 3. To reduce battery consumption of a terminal, a paging cycle is defined in the system. Each terminal is corresponding to its own paging frame and paging subframe/moment in the paging cycle. To be specific, the terminal needs to detect for a paging message only at a specific paging moment, that is, the terminal may use discontinuous reception (discontinues reception, DRX). The paging cycle may also be referred to as a paging DRX cycle or a DRX cycle. Before sending data, a base station needs to first perform a clear channel assessment (clear channel assessment, CCA) to measure energy on a current channel; and when the CCA succeeds, the base station needs to send a paging message to specific UE at a paging moment.

The DRX is intended to reduce power consumption of the UE. The base station sends a DRX configuration parameter, for example, a DRX cycle, to the UE, so that the UE can be in two states: an active period and a dormant period. In the dormant period, the UE stops listening to a PDCCH message, and disables a radio frequency (radio frequency, RF) transceiver. In the active period, the UE normally listens to a PDCCH, and enables the RF transceiver.

A paging frame (paging frame, PF) shown in FIG. 3 indicates a specific system frame in which a paging message should appear, and includes one or more paging moments. A PO is a subframe and indicates a specific subframe moment at which a physical downlink control channel (physical downlink control channel, PDCCH) scrambled by a paging radio network temporary identifier (paging-radio network temporary identity, P-RNTI) may be transmitted.

In the embodiments of this application, the PDCCH scrambled by the P-RNTI may need to be repeatedly sent in a plurality of subframes. The same PDCCH is sent in all subframes. The 1st subframe for sending the PDCCH scrambled by the P-RNTI is determined based on a PO. To be specific, the PO is corresponding to the 1st subframe of a plurality of PDCCHs that are sent repeatedly. If a subframe corresponding to the PO is not a valid subframe, for example, the subframe corresponding to the PO is not a valid downlink subframe, the 1st valid downlink subframe after the PO is the 1st subframe of the PDCCH scrambled by the P-RNTI. In addition, when a first message is a broadcast message, the first message may be sent a plurality of times in a first time unit through a PDCCH scrambled by a system information-radio network temporary identifier (System Information-Radio Network Temporary Identifier, SI-RNTI) and a PDSCH corresponding to the PDCCH. To be specific, the first time unit is corresponding to a time window, and the first message is repeatedly sent in the time window. Subframes or slots used for repeated sending in the time window may be continuous or discrete. Correspondingly, one or more second time units corresponding to the first message are also corresponding to a time window. Duration of the time window is the same as duration of the time window corresponding to the first time unit. Whether the first message is sent continuously or discretely in the time window corresponding to the second time unit(s) is the same as that in the time window corresponding to the first unit.

Currently, in a DRX cycle, a terminal device needs to listen to a paging message in a location of only one PO. The terminal device may calculate locations of a PF and a PO based on the following formulas.

The location of the PF may be given by a formula (1):

$$\text{SFN mod } T = (T \text{ div } N)*(UE\_ID \text{ mod } N) \qquad (1)$$

where SFN is a system frame number, T is a paging cycle, N is a quantity of paging frames in the paging cycle, and UE_ID is an identifier of the terminal device.

The location of the PO may be given by a formula (2):

$$i\_s = \text{floor}(UE\_ID/N) \text{ mod } Ns \qquad (2)$$

where i s is an index number of the PO, UE_ID is the identifier of the terminal device, N is the quantity of paging frames in the paging cycle, and Ns is a quantity of paging subframes in a paging frame.

The location of the PO may be obtained based on the foregoing formula, and the terminal device may receive, in the location of the PO, a paging message sent by a base station. Likewise, the base station may also obtain a location of a PO of each terminal based on the foregoing formula. After a CCA succeeds, if channel occupation duration corresponding to the CCA includes a PO, the base station sends a paging message to a terminal device in a location of the PO, so that the terminal device is in an active period.

Currently, without considering a case in which uplink/downlink switching occurs a plurality of times during one occupation of a channel, a CCA cycle is 80 ms. To be specific, if a CCA of a base station fails, no downlink data is to be sent on the channel in next 80 ms. Consequently, no paging can be delivered.

To resolve this problem, the embodiments of this application provide a message transmission method. It should be noted that in the embodiments of this application, a sending cycle may be a paging cycle or a broadcast cycle, and a first message may be a paging message or a broadcast message. The broadcast message may include a system message such as a SIB1, a SIB2, ..., or a SIB19. The broadcast cycle may further include a sending cycle of the system message such as the SIB1, the SIB2, ..., or the SIB19. A first time unit is a moment at which the first message is initially sent. Using the paging message as an example, a first time unit for the paging message is the foregoing location of a PO. A second time unit(s) is a moment for extended sending of the first message, that is, a sending opportunity added for the first message in a current sending cycle.

To clearly describe the message transmission method provided in the embodiments of this application, the following describes a message transmission procedure by using a paging message and a paging cycle as examples. This message transmission procedure is also applicable to the broadcast message and the broadcast cycle. This is not limited.

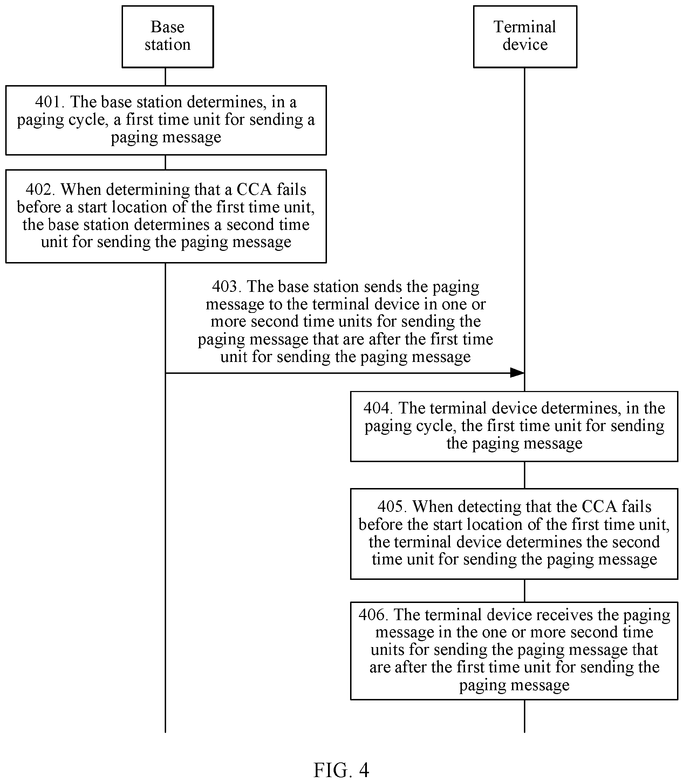

With reference to a procedure of a message transmission method shown in FIG. 4, the following describes the message transmission method provided in this embodiment of this application based on interaction between a base station and a terminal device.

As shown in FIG. 4, the procedure specifically includes the following steps.

Step 401. In a paging cycle, the base station determines a first time unit for sending a paging message.

The first time unit for sending the paging message is a start location for sending the paging message, that is, the aforementioned location of a PO. For a manner of determining, by the base station, the first time unit for sending the paging message, refer to the foregoing manner of calculating a location of a PO. Details are not described again. In this embodiment of this application, a time unit may be one or more subframes, or may be one or more slots.

In this embodiment of this application, a quantity of times of extended sending of the paging message may be configured through higher-layer system signaling, or may be agreed on by the base station and the terminal device. If the quantity of times of extended sending of the paging message is configured through the higher-layer system signaling, the base station further needs to notify the terminal device of the quantity of times of extended sending of the paging message, so that the terminal device may determine a second time unit(s) for sending the paging message.

It should be noted that in this embodiment of this application, the first time unit for sending the paging message and the second time unit(s) for sending the paging message each are a start location of a PDCCH corresponding to the paging message, that is, a start moment of the first time unit for sending the paging message or the second time unit(s) for sending the paging message.

Step 402. When determining, before a start location of the first time unit, that a CCA fails, the base station determines the second time unit(s) for sending the paging message.

When obtaining the first time unit for sending the paging message in the paging cycle, the base station needs to determine, before the start location of the first time unit for sending the paging message, whether the CCA succeeds or fails. The CCA may include an eCCA. The CCA occurs before the start location of the first time unit. An end location of the CCA may be the start location of the first time unit, or may be ahead of the start location of the first time unit.

When determining that the CCA succeeds, the base station directly sends the paging message to the terminal device in the first time unit for sending the paging message. When determining that the CCA fails, the base station needs to determine the second time unit(s) for sending the paging message. Specifically, the base station may determine, based on the quantity of times of extended sending of the paging message and a preset time interval, the second time unit(s) for sending the paging message after the first time unit for sending the paging message. In other words, the second time unit(s) for sending the paging message is a time unit that is after the first time unit for sending the paging message and that is determined based on the quantity of times of extended sending of the paging message and the preset time interval. The preset time interval may be a time interval between the first time unit and the second time unit(s) and/or a time interval between the second time units. For example, when the quantity of times of extended sending of the paging message is 1, the preset time interval is the time interval between the first time unit and the second time unit(s); or when the quantity of times of extended sending of the paging message is greater than 1, the preset time interval further includes the time interval between the second time units. The preset time interval may be set based on duration of one occupation of a data channel in an enhanced machine type communication on unlicensed spectrum (enhanced machine type communication on unlicensed spectrum, eMTC-U) service, or may be a difference between channel preemption start times of two CCAs of the base station, or may be a value specified based on experience. This is not limited in this embodiment of this application. Optionally, to prevent the second time unit(s) for sending the paging message from becoming a continuous time window, the preset time interval needs to be greater than 1 ms. A start location of the second time unit(s) may be the 1st subframe or slot of the second time unit(s).

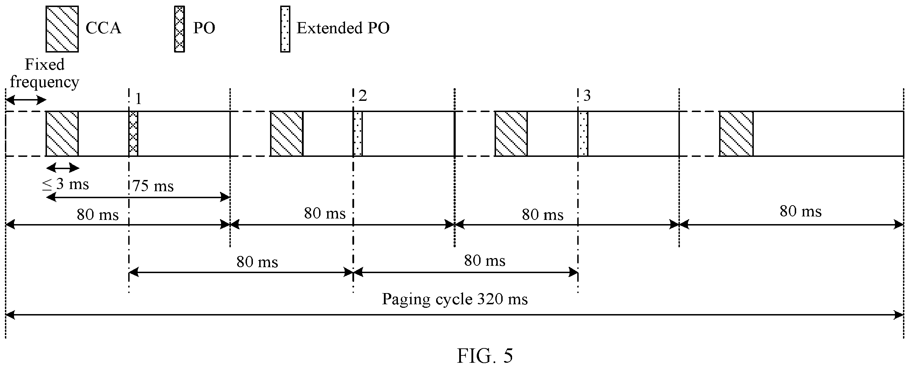

In a structure shown in FIG. 5, in a CCA cycle of 80 ms, the first 5 ms is used to transmit a primary synchronization signal, a secondary synchronization signal, a system message, and the like on a fixed-frequency channel. The first several ms of the remaining 75 ms is used for performing a CCA, and CCA duration may be less than or equal to 3 ms. In FIG. 5, a location of a PO 1 is the first time unit for sending the paging message, that is, the start location for sending the paging message, a PO 2 and a PO 3 are second time units for sending the paging message, and the quantity of times of extended sending of the paging message is 2. A CCA also needs to be performed before the paging message is sent in locations of the PO 2 and the PO 3. A paging cycle is 320 ms. In the structure shown in FIG. 5, the preset time interval is a difference between channel preemption start times of two CCAs of the base station, or may be a value specified based on experience, for example, may be 10 ms or 20 ms.

Step 403. The base station sends the paging message to the terminal device in one or more second time units for sending the paging message after the first time unit for sending the paging message.

After determining the second time unit(s) for sending the paging message, the base station may send the paging message to the terminal device in the one or more second time units for sending the paging message after the first time unit for sending the paging message.

For example, when determining, before a start location of the 1st second time unit for sending the paging message, that a CCA succeeds, the base station needs to send the paging message only in the 1st second time unit for sending the paging message, and stops sending the paging message in a second time unit(s) after the 1st second time unit for sending the paging message in the current cycle. If determining that the CCA fails, the base station needs to determine, before a start location of the 2nd second time unit for sending the paging message, whether a CCA succeeds, until determining, before a start location of a subsequent second time unit for sending the paging message, that a CCA succeeds, and then the base station sends the paging message in the second time unit for sending the paging message in which the CCA succeeds.

If all CCAs of the base station before start locations of all second time units for sending the paging message fail, the base station no longer sends the paging message in the paging cycle.

In the structure shown in FIG. 5, a quantity of second time units corresponding to the paging message is 2. When determining, before a start location of the PO 1, that a CCA fails, the base station determines, before a start location of the PO 2, whether a CCA succeeds. If the CCA succeeds, the base station sends the paging message to the terminal device in the location of the PO 2; or if the CCA fails, the base station determines, before the location of the PO 3, whether a CCA succeeds. If the CCA succeeds, the base station sends the paging message to the terminal device in the location of the PO 3; or if the CCA fails, the base station no longer sends the paging message to the terminal device in the paging cycle. To be specific, in the paging cycle, provided that the base station determines once, before a start location of a second time unit(s) for sending the paging message, that a CCA succeeds, the base station may send the paging message in the second time unit(s) for sending the paging message in which the CCA succeeds, and no longer send the paging message in a subsequent second time unit(s) for sending the paging message.

Optionally, to avoid impact on a quantity of to-be-paged terminal devices, when determining that the one or more second time units for sending the paging message that are after the first time unit for sending the paging message are a first time unit for sending a paging message to a first device, the base station sends the paging messages to the terminal device and the first device in the one or more second time units for sending the paging message. The first device is a device, other than the terminal device, that is connected to the base station. To be specific, when the paging messages need to be sent to the first device and the terminal device both in the second time unit(s) for sending the paging message, if resources are sufficient in this case, the paging messages may be simultaneously sent to the first device and the terminal device.

If resources are insufficient, the base station first sends a first paging message to the first device in the one or more second time units for sending the paging message, and sends the paging message to the terminal device in a preset time period after the one or more second time units for sending the paging message. To be specific, when the second time unit(s) for sending the paging message to the terminal device is a first time unit for sending a paging message to another terminal device, the base station preferentially sends the paging message to the first device, and then sends the paging message to the terminal device in the preset time period after the second time unit(s) for sending the paging message to the terminal device. A start moment of the preset time period is the start location of the second time unit(s). Duration of the preset time period may be set based on experience, for example, may be 1 ms or 2 ms after the second time unit(s) for sending the paging message, or may be related to a location of the second time unit(s). Assuming that duration for sending the paging message once is delta, with a unit of a subframe or a slot, when the paging message is sent in the 1st second time unit, the preset time period is 2*delta; when the paging message is sent in the 2nd second time unit, the preset time period is 3*delta; and so on. delta is a positive integer, with a unit of a subframe or a slot.

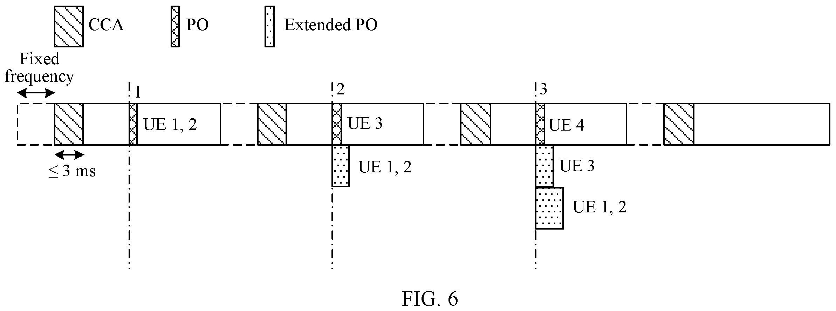

As shown in FIG. 6, a location of a PO 1 is a location of a first time unit for sending a paging message that is determined by the base station for sending paging messages to UE 1 and UE 2, a location of a PO 2 is a location of a first time unit for sending a paging message that is determined by the base station for sending a paging message to UE 3, and a PO 3 is a first time unit for sending a paging message that is determined by the base station for sending a paging message to UE 4. In addition, the locations of the PO 2 and the PO 3 are also locations of second time units determined by the base station for sending paging messages to the UE 1 and the UE 2, and the location of the PO 3 is also a location of a second time unit determined by the base station for sending a paging message to the UE 3.

When determining, before a start location of the PO 1, that a CCA fails, the base station needs to send paging messages to the UE 1 and the UE 2 in the location of the PO 2. The location of the PO 2 is also the first time unit for sending a paging message that is determined by the base station for sending a paging message to the UE 3. In this case, if the base station has sufficient resources in one subframe, the base station starts to send a paging message to the UE 3 in the location of the PO 2 while sending paging messages to the UE 1 and the UE 2. If the base station has insufficient resources in one subframe, the base station still sends a paging message to the UE 3 in the location of the PO 2, and sends paging messages to the UE 1 and the UE 2 at 1 ms after the location of the PO 2. By analogy, if determining, before a start location of the PO 2, that a CCA fails, in the location of the PO 3, the base station first sends a paging message to the UE 4, then sends a paging message to the UE 3, and finally sends messages to the UE 1 and the UE 2. If resources in a subframe corresponding to the location of the PO 3 are sufficient, the base station may alternatively send paging messages to the UE 1, the UE 2, the UE 3, and the UE 4 simultaneously; or if resources in a subframe corresponding to the location of the PO 3 are insufficient, the base station may preferentially send a paging message to the UE 4, or preferentially send a paging message to the UE 3 and/or the UE 2 and/or the UE 1 other than the UE 4. Using the location of the PO 3 as an example, assuming that 1 ms is required for one paging transmission, because the location of the PO 3 is a location of the 1st second time unit corresponding to the UE 3, a preset time period corresponding to the UE 3 may be 2 ms. However, the location of the PO 3 is a location of the 2nd second time unit corresponding to the UE 1 and the UE 2, and therefore a preset time period corresponding to the UE 1 and the UE 2 is 3 ms.

Optionally, if the first message is a broadcast message, the broadcast message may be classified into a first broadcast message and a second broadcast message based on different broadcast cycles of broadcast messages. The first broadcast message and the second broadcast message are corresponding to different broadcast cycles. That the base station sends the first broadcast message to the terminal device in one or more second time units after a first time unit for sending the first broadcast message specifically includes: when determining that the one or more second time units for sending the first broadcast message that are after the first time unit for sending the first broadcast message are a first time unit for sending the second broadcast message, the base station sends the first broadcast message and the second broadcast message to the terminal device in the one or more second time units for sending the first broadcast message. To be specific, when resources in a subframe corresponding to the second time unit(s) for sending the first broadcast message are sufficient, the first broadcast message and the second broadcast message may be sent simultaneously.

If the resources are insufficient, the base station first sends the second broadcast message to the terminal device in the one or more second time units for sending the first broadcast message, and sends the first broadcast message to the terminal device in a preset time period after the one or more second time units for sending the first broadcast message. To be specific, because the second time unit(s) for sending the first broadcast message is the first time unit for sending the second broadcast message, the base station needs to preferentially send the second broadcast message, and then send the first broadcast message to the terminal device in the preset time period after the second time unit(s) for sending the first broadcast message.

Optionally, duration of the preset time period may be further associated with the quantity of times of extended sending of the paging message, that is, the preset time period may be determined based on the quantity of times of extended sending of the paging message. For example, the preset time period may be less than or equal to the quantity of times of extended sending of the paging message; or assuming that one transmission of a PDCCH scrambled by a P-RNTI needs to last for N time units, the preset time period may be less than or equal to the quantity of times of extended sending of the paging message multiplied by N; or assuming that one transmission of a PDCCH scrambled by a P-RNTI and a PDSCH corresponding to the PDCCH needs to last for M time units, the preset time period may be less than or equal to the quantity of times of extended sending of the paging message multiplied by M. In this way, a time window may be formed at the second time unit(s) for sending the paging message. A start location of the time window may be the start location of the second time unit(s), or may be a location with a spacing of L subframes or slots from the second time unit(s). L is a positive integer. The base station may continuously send paging messages to the terminal device in the preset time period.

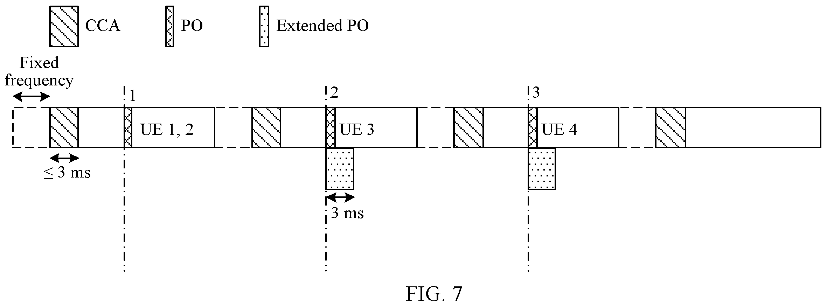

In a structure shown in FIG. 7, the quantity of times of extended sending of the paging message is 2, and the preset time period is 3 ms. There is a sending time window of 3 ms at the second time unit(s) for sending the paging message to UE 1 and UE 2. The base station may send paging messages to the UE 1 and the UE 2 in any one of the subframes of 3 ms.

Optionally, the base station sends the first message to the terminal device through a scrambled PDCCH, or a scrambled PDCCH and a PDSCH corresponding to the scrambled PDCCH. The scrambled PDCCH may be a PDCCH scrambled by an SI-RNTI or a PDCCH scrambled by a P-RNTI. When the first message is a broadcast message, the scrambled PDCCH may be the PDCCH scrambled by the SI-RNTI; or when the first message is the paging message, the scrambled PDCCH may be the PDCCH scrambled by the P-RNTI.

Step 404. In the paging cycle, the terminal device determines the first time unit for sending the paging message.

The first time unit for sending the paging message is a start location for sending the paging message, that is, the aforementioned location of a PO. For a manner of determining, by the terminal device, the first time unit for sending the paging message, refer to the foregoing manner of calculating a location of a PO. Details are not described again.

Step 405. When detecting, before the start location of the first time unit, that the CCA fails, the terminal device determines the second time unit (s) for sending the paging message.

When determining the first time unit for sending the paging message in the paging cycle, the terminal device needs to detect, before the start location of the first time unit for sending the paging message, whether the CCA of the base station succeeds or fails. When detecting that the CCA of the base station succeeds, the terminal device receives, in the first time unit for sending the paging message, the paging message sent by the base station. When detecting that the CCA fails, the terminal device needs to determine the second time unit(s) for sending the paging message. Specifically, the terminal device may determine, based on the quantity of times of extended sending of the paging message and the preset time interval, the second time unit(s) for sending the paging message after the first time unit for sending the paging message. In other words, the second time unit(s) for sending the paging message is a time unit that is after the first time unit for sending the paging message and that is determined based on the quantity of times of extended sending of the paging message and the preset time interval. The preset time interval may be a time interval between the first time unit and the second time unit(s) and/or a time interval between the second time units. For example, when the quantity of times of extended sending of the paging message is 1, the preset time interval is the time interval between the first time unit and the second time unit(s); or when the quantity of times of extended sending of the paging message is greater than 1, the preset time interval further includes the time interval between the second time units. The preset time interval may be set based on duration of one occupation of a data channel in eMTC-U, or may be a difference between channel preemption start times of two CCAs of the base station, or may be a value specified based on experience. This is not limited in this embodiment of this application. Optionally, to prevent the second time unit(s) for sending the paging message from becoming a continuous time window, the preset time interval needs to be greater than 1 ms.

The following describes a process of determining, by the terminal, whether a CCA succeeds or fails.

On the base station side, whether a CCA succeeds is detected through energy detection or the like, as described in BACKGROUND. For receiving the first message, the terminal does not determine whether a CCA on the terminal side succeeds, but determines whether a CCA on the base station side succeeds. The base station may send the first message to the terminal only when the CCA on the base station side succeeds. The terminal may determine, in the following manners, whether the CCA on the base station side succeeds.

Manner 1: When sending downlink data, the base station sends a specific known sequence before a start location for sending the data. On the terminal side, a related operation is performed by using a local known sequence and a received data sequence. If a related result exceeds a threshold, the terminal may determine that the CCA of the base station succeeds, that is, the terminal determines that the base station has sent downlink data; or if a related result does not exceed a threshold, the terminal may determine that the CCA of the base station fails, that is, the terminal determines that the base station has not sent downlink data.

Manner 2: When receiving the first message, the terminal detects, based on a sending cycle, for a PDCCH scrambled by an SI-RNTI and/or a P-RNTI. If a PDCCH scrambled by an SI-RNTI and/or a P-RNTI exists, the terminal may determine that the CCA of the base station succeeds, that is, the terminal determines that the base station has sent downlink data. If the terminal determines, based on a sending cycle, that downlink data may include a PDCCH scrambled by an SI-RNTI and/or a P-RNTI, but the terminal does not detect a PDCCH scrambled by an SI-RNTI and/or a P-RNTI, the terminal may determine that the base station has not sent a first message, or determine that the CCA of the base station fails.

A manner of determining, by the terminal, whether the CCA of the base station succeeds is not limited in this solution.

Step 406. The terminal device receives the paging message in the one or more second time units for sending the paging message after the first time unit for sending the paging message.

After determining the second time unit(s) for sending the paging message, the terminal device may receive, in the one or more second time units for sending the paging message after the first time unit for sending the paging message, the paging message sent by the base station.

For example, when detecting, before the start location of the 1st second time unit for sending the paging message, that the CCA of the base station succeeds, the terminal device needs to receive the paging message only in the 1st second time unit for sending the paging message, and stops receiving the paging message in a second time unit(s) after the 1st second time unit for sending the paging message in the current cycle. If detecting that the CCA fails, the terminal device needs to detect, before the start location of the 2nd second time unit for sending the paging message, whether the CCA of the base station succeeds, until detecting, before a start location of a second time unit after a current second time unit, that a CCA succeeds, and then the terminal device receives the paging message in the second time unit for sending the paging message in which the CCA succeeds.

If detecting, before start locations of all second time units for sending the paging message, that all CCAs of the base station fail, the terminal device no longer receives the paging message in the paging cycle.

In the structure shown in FIG. 5, when detecting, before the start location of the PO 1, that the CCA fails, the terminal device detects, before the start location of the PO 2, whether the CCA succeeds. If the CCA succeeds, the terminal device receives, in the location of the PO 2, the paging message sent by the base station; or if the CCA fails, the terminal device detects, before the start location of the PO 3, whether the CCA succeeds. If the CCA succeeds, the terminal device receives, in the location of the PO 3, the paging message sent by the base station; or if the CCA fails, the terminal device no longer receives the paging message in the paging cycle. To be specific, in the paging cycle, provided that the terminal device detects once, before a start location of a second time unit(s) for sending the paging message, that a CCA of the base station succeeds, the terminal device may receive the paging message in the second time unit(s) for sending the paging message in which the CCA succeeds, and no longer receive the paging message in a second time unit(s) after the second time unit for sending the paging message in which the CCA succeeds.

For example, the quantity of times of extended sending of the paging message is M, that is, there are M locations of second time units. Counting the first time unit, there may be M+1 sending locations in total.

The terminal first determines, in the first time unit, whether a CCA succeeds. If the CCA succeeds, the terminal no longer receives the paging message in the locations of the second time units in the sending cycle; or if the CCA fails, the terminal determines, in a second time unit(s), whether a CCA succeeds.

The locations of the second time units are m1, m2, ..., and mM

The terminal first determines, before m1, whether a CCA succeeds. If the CCA succeeds, the terminal receives the paging message at m1, and no longer receives the paging message at m2, ..., and mM. If determining, before m1, that a CCA of the base station fails, the terminal continues to determine, before m2, whether a CCA succeeds, and so on.

Assuming that the terminal detects, at m1, m2, ..., and mN-1, that CCAs fail, and detects, at mN, that a CCA succeeds, the terminal receives the paging message at mN, and no longer receives the paging message at mN+1, ..., and mM.

N is less than or equal to M.

Optionally, to avoid impact on a quantity of to-be-paged terminal devices, when determining that the one or more second time units for sending the paging message that are after the first time unit for sending the paging message are a first time unit for sending a paging message to a first device, the base station sends the paging messages to the terminal device and the first device in the one or more second time units for sending the paging message. The first device is a device, other than the terminal device, that is connected to the base station. To be specific, when the paging messages need to be sent to the first device and the terminal device both in the second time unit(s) for sending the paging message, if resources are sufficient in this case, the paging messages may be simultaneously sent to the first device and the terminal device. In this case, the terminal device receives, in the second time unit(s) for sending the paging message, the paging message sent by the base station.

If resources are insufficient, the base station first sends a first paging message to the first device in the one or more second time units for sending the paging message, and sends the paging message to the terminal device in a preset time period after the one or more second time units for sending the paging message. To be specific, when the second time unit(s) for sending the paging message to the terminal device is a first time unit for sending a paging message to another terminal device, the base station preferentially sends the paging message to the first device, and then sends the paging message to the terminal device in the preset time period after the second time unit(s) for sending the paging message to the terminal device. In this case, the terminal device receives, in the preset time period after the second time unit(s) for sending the paging message, the paging message sent by the base station. A start moment of the preset time period is the start location of the second time unit(s). Duration of the preset time period may be set based on experience, for example, may be 1 ms or 2 ms after the second time unit(s) for sending the paging message, or may be related to a location of the second time unit(s). Assuming that duration for sending the paging message once is delta, with a unit of a subframe or a slot, when the paging message is sent in the 1st second time unit, the preset time period is 2*delta; when the paging message is sent in the 2nd second time unit, the preset time period is 3*delta; and so on. delta is a positive integer, with a unit of a subframe or a slot.

As shown in FIG. 6, a location of a PO 1 is a location of a first time unit for sending a paging message that is determined by the base station for sending paging messages to UE 1 and UE 2, a location of a PO 2 is a location of a first time unit for sending a paging message that is determined by the base station for sending a paging message to UE 3, and a PO 3 is a first time unit for sending a paging message that is determined by the base station for sending a paging message to UE 4. In addition, the locations of the PO 2 and the PO 3 are also locations of second time units determined by the base station for sending paging messages to the UE 1 and the UE 2, and the location of the PO 3 is also a location of a second time unit determined by the base station for sending a paging message to the UE 3.

When determining, before a start location of the PO 1, that a CCA fails, the base station needs to send paging messages to the UE 1 and the UE 2 in the location of the PO 2. The location of the PO 2 is also the first time unit for sending a paging message that is determined by the base station for sending a paging message to the UE 3. In this case, if the base station has sufficient resources in one subframe, the base station starts to send a paging message to the UE 3 in the location of the PO 2 while sending paging messages to the UE 1 and the UE 2. After detecting, before a start location of the PO 2, that a CCA of the base station succeeds, the UE 1 and the UE 2 receive, in the location of the PO 2, the paging messages sent by the base station, and the UE 3 also receives, in the location of the PO 2, the paging message sent by the base station. If the base station has insufficient resources in one subframe, the base station still sends a paging message to the UE 3 in the location of the PO 2, and sends paging messages to the UE 1 and the UE 2 at 1 ms after the location of the PO 2. In this case, if detecting, before the start location of the PO 2, that a CCA of the base station succeeds, the UE 1 and the UE 2 receive, at 1 ms after the location of the PO 2, the paging messages sent by the base station. By analogy, if detecting, before the start location of the PO 2, that the CCA of the base station fails, the terminal device receives, within 2 ms after the location of the PO 3, the paging message sent by the base station.

Optionally, if the first message is a broadcast message, the broadcast message may be classified into a first broadcast message and a second broadcast message based on different broadcast cycles of broadcast messages. The first broadcast message and the second broadcast message are corresponding to different broadcast cycles. That the base station sends the first broadcast message to the terminal device in one or more second time units after a first time unit for sending the first broadcast message specifically includes: when determining that the one or more second time units for sending the first broadcast message that are after the first time unit for sending the first broadcast message are a first time unit for sending the second broadcast message, the base station sends the first broadcast message and the second broadcast message to the terminal device in the one or more second time units for sending the first broadcast message. To be specific, when resources in a subframe corresponding to the second time unit(s) for sending the first broadcast message are sufficient, the first broadcast message and the second broadcast message may be sent simultaneously. In this case, the terminal device receives, in the second time unit(s) for sending the first broadcast message, the first broadcast message sent by the base station.

If the resources are insufficient, the base station first sends the second broadcast message to the terminal device in the one or more second time units for sending the first broadcast message, and sends the first broadcast message to the terminal device in a preset time period after the one or more second time units for sending the first broadcast message. To be specific, because the second time unit(s) for sending the first broadcast message is the first time unit for sending the second broadcast message, the base station needs to preferentially send the second broadcast message, and then send the first broadcast message to the terminal device in the preset time period after the second time unit(s) for sending the first broadcast message. In this case, the terminal device receives, in the preset time period after the second time unit(s) for sending the first broadcast message, the first broadcast message sent by the base station.

Optionally, duration of the preset time period may be further associated with the quantity of times of extended sending of the paging message, that is, the preset time period may be determined based on the quantity of times of extended sending of the paging message. For example, the preset time period may be less than or equal to the quantity of times of extended sending of the paging message; or assuming that one transmission of a PDCCH scrambled by a P-RNTI needs to last for N time units, the preset time period may be less than or equal to the quantity of times of extended sending of the paging message multiplied by N; or assuming that one transmission of a PDCCH scrambled by a P-RNTI and a PDSCH corresponding to the PDCCH needs to last for M time units, the preset time period may be less than or equal to the quantity of times of extended sending of the paging message multiplied by M. In this way, a time window may be formed at the second time unit(s) for sending the paging message. A start location of the time window may be the start location of the second time unit(s), or may be a location with a spacing of L subframes or slots from the second time unit(s). L is a positive integer. The terminal device may continuously receive, in the preset time period, paging messages sent by the base station.

In the structure shown in FIG. 7, the quantity of times of extended sending of the paging message is 2, and the preset time period is 3 ms. There is a sending time window of 3 ms at the second time units for sending the paging message to UE 1 and UE 2. The UE 1 and the UE 2 may continuously receive, within the 3 ms, paging messages sent by the base station.

Optionally, when receiving the first message sent by the base station, the terminal device may receive the paging message by detecting a scrambled PDCCH. The scrambled PDCCH may be a PDCCH scrambled by an SI-RNTI or a PDCCH scrambled by a P-RNTI. When the first message is a broadcast message, the scrambled PDCCH may be the PDCCH scrambled by the SI-RNTI; or when the first message is the paging message, the scrambled PDCCH may be the PDCCH scrambled by the P-RNTI.

The foregoing embodiment shows that the base station determines, in a first sending cycle, a first time unit for sending a first message, where the sending cycle includes one of the following cycles: a paging cycle or a broadcast cycle, the first message includes one of the following messages: a paging message or a broadcast message, and the time unit includes one of the following time units: one or more subframes, or one or more slots; when determining, before a start location of the first time unit, that a CCA fails, determines a second time unit(s) for sending the first message; and sends the first message to the terminal device in one or more second time units for sending the first message that are after the first time unit for sending the first message. When it is determined, before the start location of the first time unit, that the CCA fails, the first message is sent in the second time unit(s) in the first sending cycle, so that a success rate for sending the first message can be increased.

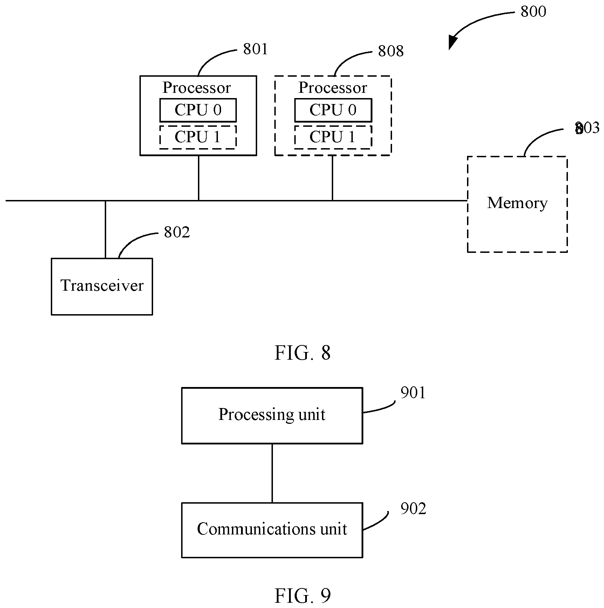

Based on a same inventive concept, FIG. 8 is a schematic diagram of an apparatus according to an embodiment of this application. The apparatus may be a base station, and may perform the method performed by the base station in any one of the foregoing embodiments.

The base station 800 includes at least one processor 801 and a transceiver 802, and optionally further includes a memory 803. The processor 801, the transceiver 802, and the memory 803 are connected to each other.

The processor 801 may be a general-purpose central processing unit (CPU), a microprocessor, an application-specific integrated circuit (application-specific integrated circuit, ASIC), or one or more integrated circuits for controlling program execution in this embodiment of this application.

The transceiver 802 is configured to communicate with another device or a communications network. The transceiver includes a radio frequency circuit.

The memory 803 may be a read-only memory (read-only memory, ROM) or another type of static storage device that can store static information and an instruction, a random access memory (random access memory, RAM) or another type of dynamic storage device that can store information and an instruction, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. However, this is not limited thereto. The memory 803 may exist independently, and is connected to the processor 801. The memory 803 may be integrated with the processor. The memory 803 is configured to store application program code for executing the embodiments of this application, and the execution is controlled by the processor 801. The processor 801 is configured to execute the application program code stored in the memory 803.

During specific implementation, in an embodiment, the processor 801 may include one or more CPUs, for example, a CPU 0 and a CPU 1 in FIG. 8.

During specific implementation, in one embodiment, the base station 800 may include a plurality of processors, for example, the processor 801 and a processor 808 in FIG. 8. Each of the processors may be a single-core (single-CPU) processor, or may be a multi-core (multi-CPU) processor. Herein, the processor may be one or more devices, circuits, and/or processing cores for processing data (for example, a computer program instruction).

It should be understood that the base station may be configured to implement the steps performed by the base station in the message transmission method in the embodiments of this application. For related features, refer to the foregoing descriptions. Details are not described herein again.

In this application, functional modules in the base station may be obtained through division based on the foregoing method examples. For example, functional modules may be obtained through division in correspondence with functions, or two or more functions may be integrated into one processing module. The integrated module may be implemented in a form of hardware, or may be implemented in a form of a software functional module. It should be noted that, in this application, module division is exemplary, and is merely a logical function division. During actual implementation, another division manner may be used. For example, when each functional module is obtained through division based on each corresponding function, FIG. 9 is a schematic diagram of an apparatus. The apparatus may be the base station in the foregoing embodiment. The apparatus includes a processing unit 901 and a communications unit 902.

The processing unit 901 is configured to: determine, in a first sending cycle, a first time unit for sending a first message, where the sending cycle includes one of the following cycles: a paging cycle or a broadcast cycle, the first message includes one of the following messages: a paging message or a broadcast message, and the time unit includes one of the following time units: one or more subframes, or one or more slots; and in the current sending cycle, when determining, before a start location of the first time unit for sending the first message, that a CCAfails, determine a second time unit(s) for sending the first message.

The communications unit 902 is configured to send the first message to a terminal device in one or more second time units for sending the first message that are after the first time unit, determined by the processing unit 901, for sending the first message.

Optionally, the first message is a paging message.

When controlling the communications unit 902 to send the first message to the terminal device in the one or more second time units for sending the first message that are after the first time unit for sending the first message, the processing unit 901 is specifically configured to:

when the processing unit 901 determines that the one or more second time units for sending the paging message that are after the first time unit for sending the paging message are a first time unit for sending a paging message to a first device, control the communications unit to send the paging messages to the terminal device and the first device in the one or more second time units for sending the paging message, where the first device is a device, other than the terminal device, that is connected to a base station.

Optionally, the first message is a paging message.

When controlling the communications unit 902 to send the first message to the terminal device in the one or more second time units for sending the first message that are after the first time unit for sending the first message, the processing unit 901 is specifically configured to:

when the processing unit 901 determines that the one or more second time units for sending the paging message that are after the first time unit for sending the paging message are a first time unit for sending a paging message to a first device, control the communications unit 902 to send the paging message to the first device in the one or more second time units for sending the paging message, and send the paging message to the terminal device in a preset time period after the one or more second time units for sending the paging message, where the first device is a device, other than the terminal device, that is connected to a base station.

Optionally, the first message is the broadcast message, the broadcast message includes a first broadcast message and a second broadcast message, and the first broadcast message and the second broadcast message are corresponding to different broadcast cycles.

When controlling the communications unit 902 to send the first broadcast message to the terminal device in the one or more second time units for sending the first broadcast message that are after the first time unit for sending the first broadcast message, the processing unit 901 is specifically configured to:

when the processing unit 901 determines that the one or more second time units for sending the first broadcast message that are after the first time unit for sending the first broadcast message are a first time unit for sending the second broadcast message, control the communications unit 902 to send the first broadcast message and the second broadcast message to the terminal device in the one or more second time units for sending the first broadcast message.

Optionally, the first message is the broadcast message, the broadcast message includes a first broadcast message and a second broadcast message, and the first broadcast message and the second broadcast message are corresponding to different cycles.

When controlling the communications unit 902 to send the first broadcast message to the terminal device in the one or more second time units for sending the first broadcast message that are after the first time unit for sending the first broadcast message, the processing unit 901 is specifically configured to:

when the processing unit 901 determines that the one or more second time units for sending the first broadcast message that are after the first time unit for sending the first broadcast message are a first time unit for sending the second broadcast message, control the communications unit 902 to send the second broadcast message in the one or more second time units for sending the first broadcast message, and send the first broadcast message to the terminal device in a preset time period after the one or more second time units for sending the first broadcast message.

Optionally, the processing unit 901 is further configured to:

when determining, before the start location of the first time unit for sending the first message, that the CCA succeeds, control the communications unit 902 to stop, in the first sending cycle, sending the first message to the terminal device in the second time unit(s) for sending the first message; or

when determining, before a start location of the one or more second time units for sending the first message, that a CCA succeeds, after the first message is sent in a current second time unit, control the communications unit 902 to stop, in the first sending cycle, sending the first message to the terminal device in one or more second time units after the current time unit; or

when determining, before a start location of the one or more second time units for sending the first message, that a CCA fails, continue, in the first sending cycle, to perform a CCA before a start location of one or more second time units after a current second time unit until a CCA succeeds, and then in the first sending cycle, after the first message is sent in a second time unit in which it is determined that the CCA succeeds, control the communications unit 902 to stop sending the first message to the terminal device in one or more second time units after the second time unit in which it is determined that the CCA succeeds.

Optionally, the processing unit 901 is further configured to:
when determining, before a start location of all of the one or more second time units for sending the first message, that a CCA fails, control the communications unit 902 to stop sending the first message to the terminal device in the first sending cycle.

It should be understood that the base station may be configured to implement the steps performed by the base station in the message transmission method in the embodiments of this application. For related features, refer to the foregoing descriptions. Details are not described herein again.

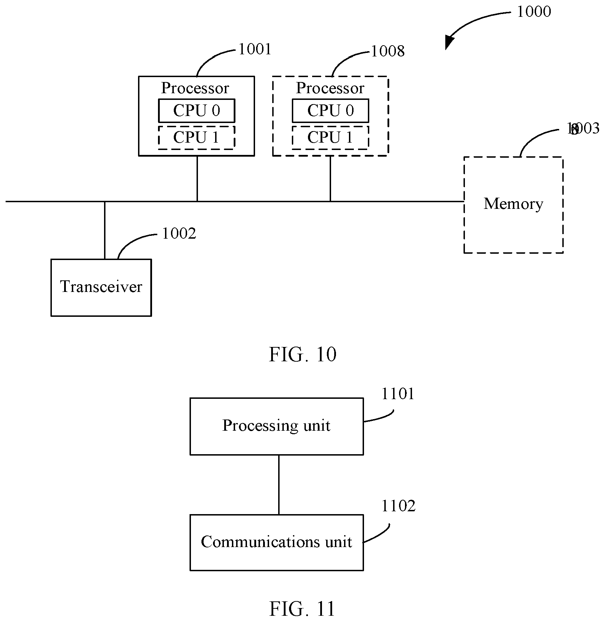

Based on a same inventive concept, FIG. 10 is a schematic diagram of an apparatus according to this application. The apparatus may be a terminal device, and may perform the method performed by the terminal device in any one of the foregoing embodiments.

The terminal device 1000 includes at least one processor 1001 and a transceiver 1002, and optionally further includes a memory 1003. The processor 1001, the transceiver 1002, and the memory 1003 are connected to each other.

The processor 1001 may be a general purpose central processing unit, a microprocessor, an application-specific integrated circuit, or one or more integrated circuits for controlling program execution in this embodiments of this application.

The transceiver 1002 is configured to communicate with another device or a communications network. The transceiver includes a radio frequency circuit.

The memory 1003 may be a read-only memory or another type of static storage device that can store static information and an instruction, a random access memory or another type of dynamic storage device that can store information and an instruction, or may be an electrically erasable programmable read-only memory, a compact disc read-only memory or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of an instruction or data structure and that can be accessed by a computer. However, the memory 1103 is not limited thereto. The memory 1003 may exist independently, and is connected to the processor 1001. The memory 1003 may be integrated with the processor. The memory 1003 is configured to store application program code for executing the embodiments of this application, and the execution is controlled by the processor 1001. The processor 1001 is configured to execute the application program code stored in the memory 1003.

During specific implementation, in an embodiment, the processor 1001 may include one or more CPUs, for example, a CPU 0 and a CPU 1 in FIG. 10.

During specific implementation, in one embodiment, the terminal device 1000 may include a plurality of processors, for example, the processor 1001 and a processor 1008 in FIG. 10. Each of the processors may be a single-core (single-CPU) processor, or may be a multi-core (multi-CPU) processor. Herein, the processor may be one or more devices, circuits, and/or processing cores for processing data (for example, a computer program instruction).

It should be understood that the terminal device may be configured to implement the steps performed by the terminal device in the message transmission method in the embodiments of this application. For related features, refer to the foregoing descriptions. Details are not described herein again.

In this application, the terminal device may be divided into functional modules based on the foregoing method example. For example, functional modules may be obtained through division based on corresponding functions, or at least two functions may be integrated into one processing module. The integrated module may be implemented in a form of hardware, or may be implemented in a form of a software functional module. It should be noted that, in this application, module division is exemplary, and is merely a logical function division. During actual implementation, another division manner may be used. For example, when each functional module is obtained through division based on each corresponding function, FIG. 11 is a schematic diagram of an apparatus. The apparatus may be the terminal device in the foregoing embodiment. The apparatus includes a processing unit 1101 and a communications unit 1102.

The processing unit 1101 is configured to: determine, in a first sending cycle, a first time unit for sending a first message, where the sending cycle includes one of the following cycles: a paging cycle or a broadcast cycle, the first message includes one of the following messages: a paging message or a broadcast message, and the time unit includes one of the following time units: one or more subframes, or one or more slots; and when detecting, before a start location of the first time unit for sending the first message, that a CCA fails, determine a second time unit(s) for sending the first message.

The communications unit 1102 is configured to receive, in one or more second time units for sending the first message that are determined by the processing unit 1101 and that are after the first time unit for sending the first message, the first message sent by the base station.

Optionally, the first message is a paging message.

That the processing unit 1101 controls the communications unit 1102 to receive, in the one or more second time units for sending the first message that are after the first time unit for sending the first message, the first message sent by the base station includes:

the processing unit 1101 controls the communications unit 1102 to receive, in a preset time period after the one or more second time units for sending the first message, the first message sent by the base station.

Optionally, the first message is the broadcast message, the broadcast message includes a first broadcast message and a second broadcast message, and the first broadcast message and the second broadcast message are corresponding to different broadcast cycles.

That the processing unit 1101 controls the communications unit 1102 to receive, in the one or more second time units for sending the first message that are after the first time unit for sending the first message, the first message sent by the base station includes:

the processing unit 1101 controls the communications unit 1102 to receive, in a preset time period after the one or more second time units for sending the first broadcast message, the first broadcast message sent by the base station.

Optionally, the preset time period is associated with a quantity of times of extended sending of the first message.

Optionally, the processing unit 1101 is further configured to:

when detecting, before the start location of the first time unit for sending the first message, that the CCA succeeds, control the communications unit 1102 to stop, in the first sending cycle, receiving, in the second time unit(s) for sending the first message, the first message sent by the base station; or

when detecting, before a start location of the one or more second time units for sending the first message, that a CCA succeeds, after controlling the communications unit 1102 to receive the first message in a current second time unit, stop, in the first sending cycle, receiving, in one or more second time units after the current second time unit, the first message sent by the base station; or

when detecting, before a start location of the one or more second time units for sending the first message, that a CCA fails, continue, in the first sending cycle, to perform CCA detection before a start location of one or more second time units after a current second time unit until it is detected that a CCA succeeds, and then in the first sending cycle, after controlling the communications unit 1102 to receive the first message in a second time unit in which it is detected that the CCA succeeds, stop receiving, in one or more second time units after the second time unit in which it is detected that the CCA succeeds, the first message sent by the base station.

Optionally, the processing unit 1101 is further configured to:

when detecting, before a start location of all of the one or more second time units for sending the first message, that a CCA fails, control the communications unit 1102 to stop receiving, in a current sending cycle, the first message sent by the base station.

Optionally, that the processing unit 1101 controls the communications unit 1102 to receive the first message sent by the base station includes:

the processing unit 1101 controls the communications unit 1102 to determine, by detecting a scrambled physical downlink control channel, whether the base station successfully sends the first message, where the scrambled PDCCH includes one of the following: a PDCCH scrambled by a system information-radio network temporary identifier SI-RNTI or a PDCCH scrambled by a paging message radio network temporary identifier P-RNTI.

Optionally, the second time unit(s) for sending the first message is a time unit that is after the first time unit for sending the first message and that is determined based on the quantity of times of extended sending of the first message and a preset time interval, and the preset time interval is a time interval between the first time unit and the second time unit(s) and/or a time interval between the second time units.

Optionally, the quantity of times of extended sending of the first message is a quantity of times that is agreed on by the base station and the terminal device, or is sent by the base station to the terminal device.

It should be understood that the terminal device may be configured to implement the steps performed by the terminal device in the message transmission method in the embodiments of this application. For related features, refer to the foregoing descriptions. Details are not described herein again.

An embodiment of this application further provides a computer storage medium. The computer storage medium is configured to store a computer software instruction used by the base station or the terminal device shown in FIG. 8 to FIG. 11. The computer software instruction includes program code designed for performing the foregoing method embodiments.

An embodiment of this application further provides a computer program product. The computer program product includes a computer software instruction, and the computer software instruction may be loaded by using a processor, to implement the method in the foregoing method embodiments.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic disk), an optical medium (for example, a DVD), a semiconductor medium (for example, a solid-state drive (Solid State Disk (SSD))), or the like.

Although the present invention is described with reference to the embodiments, in a process of implementing the present invention that claims protection, persons skilled in the art may understand and implement another variation of the disclosed embodiments by viewing the accompanying drawings, disclosed content, and the accompanying claims. In the claims, "comprising" does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

A person skilled in the art should understand that the embodiments of this application may be provided as a method, an apparatus (device), a computer readable storage medium, or a computer program product. Therefore, this application may use a form of hardware only embodiments, software only embodiments, or embodiments with a combination of software and hardware. They are collectively referred to as "modules" or "systems".

This application is described with reference to the flowcharts and/or block diagrams of the method, the apparatus (device), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although the present invention is described with reference to specific features and the embodiments thereof, obviously, various modifications and combinations may be made to them without departing from the spirit and scope of the present invention. Correspondingly, the specification and accompanying drawings are merely exemplary description of the present invention defined by the accompanying claims, and is considered as any of or all modifications, variations, combinations or equivalents that cover the scope of the present invention. Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1.   A message transmission method, comprising:

   determining, in a first sending cycle, a first time unit for sending a first message, wherein the sending cycle comprises one of the following cycles: a paging cycle or a broadcast cycle, the first message comprises one of the following messages: a paging message or a broadcast message, and the time unit comprises one of the following time units: one or more subframes, or one or more slots;
   when determining, before a start location of the first time unit, that a clear channel assessment CCA fails, determining a second time unit(s) for sending the first message; and
   sending the first message to a terminal device in one or more second time units for sending the first message that are after the first time unit for sending the first message.

2.   The method according to claim 1, wherein the first message is a paging message; and
   the sending the first message to a terminal device in one or more second time units for sending the first message that are after the first time unit for sending the first message comprises:
   when determining that the one or more second time units for sending the paging message that are after the first time unit for sending the paging message are a first time unit for sending a paging message to a first device, sending the paging messages to the terminal device and the first device in the one or more second time units for sending the paging message, wherein the first device is a device, other than the terminal device, that is connected to a base station.

3.   The method according to claim 1, wherein the first message is a paging message; and

the sending the first message to a terminal device in one or more second time units for sending the first message that are after the first time unit for sending the first message comprises:

when determining that the one or more second time units for sending the paging message that are after the first time unit for sending the paging message are a first time unit for sending a paging message to a first device, sending the paging message to the first device in the one or more second time units for sending the paging message, and sending the paging message to the terminal device in a preset time period after the one or more second time units for sending the paging message, wherein the first device is a device, other than the terminal device, that is connected to a base station.

4. The method according to any one of claims 1 to 3, the first message is a broadcast message, the broadcast message comprises a first broadcast message and a second broadcast message, and the first broadcast message and the second broadcast message are corresponding to different broadcast cycles; and

the sending the first broadcast message to a terminal device in one or more second time units for sending the first broadcast message that are after the first time unit for sending the first broadcast message comprises:

when determining that the one or more second time units for sending the first broadcast message that are after the first time unit for sending the first broadcast message are a first time unit for sending the second broadcast message, sending the first broadcast message and the second broadcast message to the terminal device in the one or more second time units for sending the first broadcast message.

5. The method according to any one of claims 1 to 3, the first message is a broadcast message, the broadcast message comprises a first broadcast message and a second broadcast message, and the first broadcast message and the second broadcast message are corresponding to different cycles; and

the sending the first broadcast message to a terminal device in one or more second time units for sending the first broadcast message that are after the first time unit for sending the first broadcast message comprises:

when determining that the one or more second time units for sending the first broadcast message that are after the first time unit for sending the first broadcast message are a first time unit for sending the second broadcast message, sending the second broadcast message in the one or more second time units for sending the first broadcast message, and sending the first broadcast message to the terminal device in a preset time period after the one or more second time units for sending the first broadcast message.

6. The method according to any one of claims 1 to 5, further comprising:

when determining, before the start location of the first time unit for sending the first message, that the CCA succeeds, stopping, in the first sending cycle, sending the first message to the terminal device in the second time unit(s) for sending the first message; or

when determining, before a start location of the one or more second time units for sending the first message, that a CCA succeeds, after the first message is sent in a current second time unit, stopping, in the first sending cycle, sending the first message to the terminal device in one or more second time units after the current time unit; or

when determining, before a start location of the one or more second time units for sending the first message, that a CCA fails, continue, in the first sending cycle, to perform a CCA before a start location of one or more second time units after a current second time unit until a CCA succeeds, and then in the first sending cycle, after the first message is sent in a second time unit in which it is determined that the CCA succeeds, stopping sending the first message to the terminal device in one or more second time units after the second time unit in which it is determined that the CCA succeeds; or

when determining, before a start location of all of the one or more second time units for sending the first message, that a CCA fails, stopping sending the first message to the terminal device in the first sending cycle.

7. A message transmission method, comprising:

determining, in a first sending cycle, a first time unit for sending a first message, wherein the sending cycle comprises one of the following cycles: a paging cycle or a broadcast cycle, the first message comprises one of the following messages: a paging message or a broadcast message, and the time unit comprises one of the following time units: one or more subframes, or one or more slots;

when detecting, before a start location of the first time unit, that a clear channel assessment CCA fails, determining a second time unit(s) for sending the first message; and

receiving the first message sent by a base station in one or more second time units for sending the first message that are after the first time unit for sending the first message.

**8.** The method according to claim 7, wherein the first message is a paging message; and
the receiving the first message sent by a base station in one or more second time units for sending the first message that are after the first time unit for sending the first message comprises:
receiving, in a preset time period after the one or more second time units for sending the first message, the first message sent by the base station.

**9.** The method according to claim 7 or 8, the first message is a broadcast message, the broadcast message comprises a first broadcast message and a second broadcast message, and the first broadcast message and the second broadcast message are corresponding to different broadcast cycles; and
the receiving the first message sent by a base station in one or more second time units for sending the first message that are after the first time unit for sending the first message comprises:
receiving, in a preset time period after the one or more second time units for sending the first broadcast message, the first broadcast message sent by the base station.

**10.** The method according to any one of claims 3, 5, 8, and 9, wherein the preset time period is associated with a quantity of times of extended sending of the first message.

**11.** The method according to any one of claims 7 to 10, further comprising:

when detecting, before the start location of the first time unit for sending the first message, that the CCA succeeds, stopping, in the first sending cycle, receiving, in the second time unit(s) for sending the first message, the first message sent by the base station; or
when detecting, before a start location of the one or more second time units for sending the first message, that a CCA succeeds, after receiving the first message in a current second time unit, stopping, in the first sending cycle, receiving, in one or more second time units after the current second time unit, the first message sent by the base station; or
when detecting, before a start location of the one or more second time units for sending the first message, that a CCA fails, continuing, in the first sending cycle, to perform CCA detection before a start location of one or more second time units after a current second time unit until a CCA success is detected, and in the first sending cycle, after receiving the first message in a second time unit in which the CCA success is detected, stopping receiving, in one or more second time units after the second time unit in which the CCA success is detected, the first message sent by the base station; or
when detecting, before a start location of all of the one or more second time units for sending the first message, that a CCA fails, stopping, in the first sending cycle, receiving the first message sent by the base station.

**12.** The method according to any one of claims 7 to 11, wherein the receiving the first message sent by the base station comprises:
determining, by detecting a scrambled physical downlink control channel, whether the base station successfully sends the first message, wherein the scrambled PDCCH comprises one of the following: a PDCCH scrambled by a system information-radio network temporary identifier SI-RNTI or a PDCCH scrambled by a paging message radio network temporary identifier P-RNTI.

**13.** The method according to any one of claims 1 to 6 or 7 to 12, wherein the second time unit(s) for sending the first message is a time unit that is after the first time unit for sending the first message and that is determined based on the quantity of times of extended sending of the first message and a preset time interval, and the preset time interval is a time interval between the first time unit and the second time unit(s) and/or a time interval between the second time units.

**14.** The method according to any one of claims 1 to 6 or 7 to 12, wherein the quantity of times of extended sending of the first message is a quantity of times that is agreed on by the base station and the terminal device, or is sent by the base station to the terminal device.

**15.** A message transmission apparatus, comprising a processing unit and a communications unit, wherein
the processing unit is configured to: determine, in a first sending cycle, a first time unit for sending a first message, wherein the sending cycle comprises one of the following cycles: a paging cycle or a broadcast cycle, the first message comprises one of the following messages: a paging message or a broadcast message, and the time unit comprises one of the following time units: one or more subframes, or one or more slots; and when determining, before a start location of the first time unit, that a CCA fails, determine a second time unit(s) for sending the first message; and
the communications unit is configured to send the first message to a terminal device in one or more second time units for sending the first message that are after the first time unit, determined by the processing unit, for sending the first message.

16. The apparatus according to claim 15, wherein the first message is a paging message; and
when controlling the communications unit to send the first message to the terminal device in the one or more second time units for sending the first message that are after the first time unit for sending the first message, the processing unit is specifically configured to:
when the processing unit determines that the one or more second time units for sending the paging message that are after the first time unit for sending the paging message are a first time unit for sending a paging message to a first device, control the communications unit to send the paging messages to the terminal device and the first device in the one or more second time units for sending the paging message, wherein the first device is a device, other than the terminal device, that is connected to a base station.

17. The apparatus according to claim 15, wherein the first message is a paging message; and
when controlling the communications unit to send the first message to the terminal device in the one or more second time units for sending the first message that are after the first time unit for sending the first message, the processing unit is specifically configured to:
when the processing unit determines that the one or more second time units for sending the paging message that are after the first time unit for sending the paging message are a first time unit for sending a paging message to a first device, control the communications unit to send the paging message to the first device in the one or more second time units for sending the paging message, and send the paging message to the terminal device in a preset time period after the one or more second time units for sending the paging message, wherein the first device is a device, other than the terminal device, that is connected to a base station.

18. The apparatus according to any one of claims 15 to 17, the first message is a broadcast message, the broadcast message comprises a first broadcast message and a second broadcast message, and the first broadcast message and the second broadcast message are corresponding to different broadcast cycles; and
when controlling the communications unit to send the first broadcast message to the terminal device in the one or more second time units for sending the first broadcast message that are after the first time unit for sending the first broadcast message, the processing unit is specifically configured to:
when the processing unit determines that the one or more second time units for sending the first broadcast message that are after the first time unit for sending the first broadcast message are a first time unit for sending the second broadcast message, control the communications unit to send the first broadcast message and the second broadcast message to the terminal device in the one or more second time units for sending the first broadcast message.

19. The apparatus according to any one of claims 15 to 17, the first message is a broadcast message, the broadcast message comprises a first broadcast message and a second broadcast message, and the first broadcast message and the second broadcast message are corresponding to different cycles; and
when controlling the communications unit to send the first broadcast message to the terminal device in the one or more second time units for sending the first broadcast message that are after the first time unit for sending the first broadcast message, the processing unit is specifically configured to:
when the processing unit determines that the one or more second time units for sending the first broadcast message that are after the first time unit for sending the first broadcast message are a first time unit for sending the second broadcast message, control the communications unit to send the second broadcast message in the one or more second time units for sending the first broadcast message, and send the first broadcast message to the terminal device in a preset time period after the one or more second time units for sending the first broadcast message.

20. The apparatus according to any one of claims 15 to 19, wherein the processing unit is further configured to:

when determining, before the start location of the first time unit for sending the first message, that the CCA succeeds, control the communications unit to stop, in the first sending cycle, sending the first message to the terminal device in the second time unit(s) for sending the first message; or
when determining, before a start location of the one or more second time units for sending the first message, that a CCA succeeds, in the first sending cycle, after the first message is sent in a current second time unit, control the communications unit to stop sending the first message to the terminal device in one or more second time units after the current time unit; or

when determining, before a start location of the one or more second time units for sending the first message, that a CCA fails, continue, in the first sending cycle, to perform a CCA before a start location of one or more second time units after a current second time unit until a CCA succeeds, and then in the first sending cycle, after the first message is sent in a second time unit in which it is determined that the CCA succeeds, control the communications unit to stop sending the first message to the terminal device in one or more second time units after the second time unit in which it is determined that the CCA succeeds; or

when determining, before a start location of all of the one or more second time units for sending the first message, that a CCA fails, control the communications unit to stop sending the first message to the terminal device in the first sending cycle.

21. A message transmission apparatus, comprising a processing unit and a communications unit, wherein
the processing unit is configured to: determine, in a first sending cycle, a first time unit for sending a first message, wherein the sending cycle comprises one of the following cycles: a paging cycle or a broadcast cycle, the first message comprises one of the following messages: a paging message or a broadcast message, and the time unit comprises one of the following time units: one or more subframes, or one or more slots; and when detecting, before a start location of the first time unit, that a CCA fails, determine a second time unit(s) for sending the first message; and
the communications unit is configured to receive, in one or more second time units for sending the first message that are determined by the processing unit and that are after the first time unit for sending the first message, the first message sent by the base station.

22. The apparatus according to claim 21, wherein the first message is a paging message; and
that the processing unit controls the communications unit to receive, in the one or more second time units for sending the first message that are after the first time unit for sending the first message, the first message sent by the base station comprises:
the processing unit controls the communications unit to receive, in a preset time period after the one or more second time units for sending the first message, the first message sent by the base station.

23. The apparatus according to claim 21, the first message is a broadcast message, the broadcast message comprises a first broadcast message and a second broadcast message, and the first broadcast message and the second broadcast message are corresponding to different broadcast cycles; and
that the processing unit controls the communications unit to receive, in the one or more second time units for sending the first message that are after the first time unit for sending the first message, the first message sent by the base station comprises:
the processing unit controls the communications unit to receive, in a preset time period after the one or more second time units for sending the first broadcast message, the first broadcast message sent by the base station.

24. The apparatus according to any one of claims 17, 19, 22, and 23, wherein the preset time period is associated with a quantity of times of extended sending of the first message.

25. The apparatus according to any one of claims 21 to 24, wherein the processing unit is further configured to:

when detecting, before the start location of the first time unit for sending the first message, that the CCA succeeds, control the communications unit to stop, in the first sending cycle, receiving, in the second time unit(s) for sending the first message, the first message sent by the base station; or

when detecting, before a start location of the one or more second time units for sending the first message, that a CCA succeeds, after controlling the communications unit to receive the first message in a current second time unit, stop, in the first sending cycle, receiving, in one or more second time units after the current second time unit, the first message sent by the base station; or

when detecting, before a start location of the one or more second time units for sending the first message, that a CCA fails, continue, in the first sending cycle, to perform CCA detection before a start location of one or more second time units after a current second time unit until a CCA success is detected, and in the first sending cycle, after controlling the communications unit to receive the first message in a second time unit in which the CCA success is detected, stop receiving, in one or more second time units after the second time unit in which the CCA success is detected, the first message sent by the base station; or

when detecting, before a start location of all of the one or more second time units for sending the first message, that a CCA fails, control the communications unit to stop receiving, in a current sending cycle, the first message sent by the base station.

**26.** The apparatus according to any one of claims 21 to 25, wherein that the processing unit controls the communications unit to receive the first message sent by the base station comprises:
the processing unit controls the communications unit to determine, by detecting a scrambled physical downlink control channel, whether the base station successfully sends the first message, wherein the scrambled PDCCH comprises one of the following: a PDCCH scrambled by a system information-radio network temporary identifier SI-RNTI or a PDCCH scrambled by a paging message radio network temporary identifier P-RNTI.

**27.** The apparatus according to any one of claims 15 to 20 or 21 to 26, wherein the second time unit(s) for sending the first message is a time unit that is after the first time unit for sending the first message and that is determined based on the quantity of times of extended sending of the first message and a preset time interval, and the preset time interval is a time interval between the first time unit and the second time unit(s) and/or a time interval between the second time units.

**28.** The apparatus according to claim 27, wherein the quantity of times of extended sending of the first message is a quantity of times that is agreed on by the base station and the terminal device, or is sent by the base station to the terminal device.

**29.** A message transmission chip, wherein the chip is connected to a memory, and is configured to read and execute a software program stored in the memory, to implement the method according to any one of claims 1 to 14.

**30.** A computer storage medium, comprising a computer-readable instruction, wherein when a computer reads and executes the computer-readable instruction, the computer is enabled to perform the method according to any one of claims 1 to 14.

FIG. 1

FIG. 2

| Paging cycle | Paging cycle | Paging cycle | Paging cycle |
|---|---|---|---|

| | | | | | PF | |
|---|---|---|---|---|---|---|

| | | | | | PO | | | |
|---|---|---|---|---|---|---|---|---|

1 ms

FIG. 3

```
┌──────────┐                                      ┌──────────┐
│   Base   │                                      │ Terminal │
│ station  │                                      │  device  │
└────┬─────┘                                      └────┬─────┘
     │                                                 │
┌────┴──────────────────────────────┐                 │
│ 401. The base station determines, │                 │
│ in a paging cycle, a first time   │                 │
│ unit for sending a paging message │                 │
└────┬──────────────────────────────┘                 │
     │                                                 │
┌────┴──────────────────────────────┐                 │
│ 402. When determining that a CCA  │                 │
│ fails before a start location of  │                 │
│ the first time unit, the base     │                 │
│ station determines a second time  │                 │
│ unit for sending the paging       │                 │
│ message                           │                 │
└────┬──────────────────────────────┘                 │
     │   403. The base station sends the paging        │
     │   message to the terminal device in one or      │
     │   more second time units for sending the        │
     │   paging message that are after the first time  │
     │   unit for sending the paging message           │
     │─────────────────────────────────────────────────▶
     │                                                 │
     │         ┌───────────────────────────────────────┴──┐
     │         │ 404. The terminal device determines, in   │
     │         │ the paging cycle, the first time unit for │
     │         │ sending the paging message                │
     │         └───────────────────────────────────────┬──┘
     │                                                 │
     │         ┌───────────────────────────────────────┴──┐
     │         │ 405. When detecting that the CCA fails    │
     │         │ before the start location of the first    │
     │         │ time unit, the terminal device determines │
     │         │ the second time unit for sending the      │
     │         │ paging message                            │
     │         └───────────────────────────────────────┬──┘
     │                                                 │
     │         ┌───────────────────────────────────────┴──┐
     │         │ 406. The terminal device receives the     │
     │         │ paging message in the one or more second  │
     │         │ time units for sending the paging message │
     │         │ that are after the first time unit for    │
     │         │ sending the paging message                │
     │         └───────────────────────────────────────┬──┘
     │                                                 │
```

FIG. 4

FIG. 5

FIG. 6

FIG. 7

800

801    808

| Processor | Processor |
| --- | --- |
| CPU 0 | CPU 0 |
| CPU 1 | CPU 1 |

803

Memory

802

Transceiver

FIG. 8

| Processing unit | 901 |

| Communications unit | 902 |

FIG. 9

1000

1001

1008

Processor

CPU 0

CPU 1

Processor

CPU 0

CPU 1

1003

Memory

1002

Transceiver

FIG. 10

1101

Processing unit

1102

Communications unit

FIG. 11

## INTERNATIONAL SEARCH REPORT

| International application No. |
|---|
| PCT/CN2017/107541 |

### A. CLASSIFICATION OF SUBJECT MATTER

H04W 72/04 (2009.01) i

According to International Patent Classification (IPC) or to both national classification and IPC

### B. FIELDS SEARCHED

Minimum documentation searched (classification system followed by classification symbols)

H04W; H04Q 7/-; H04M; H04L; H04B

Documentation searched other than minimum documentation to the extent that such documents are included in the fields searched

Electronic data base consulted during the international search (name of data base and, where practicable, search terms used)

CPRSABS, CNTXT, CNABS, CNKI, VEN, USTXT, WOTXT, EPTXT, 3GPP: 空闲信道评估, 失败, 不成功, 未成功, 不可用, 占用, 寻呼, 广播, 周期, 第二, 再次, 重新, 次数, clear channel assessment, CCA, failure, fail, occupy, paging, broadcast+, period, second, again, times

### C. DOCUMENTS CONSIDERED TO BE RELEVANT

| Category* | Citation of document, with indication, where appropriate, of the relevant passages | Relevant to claim No. |
|---|---|---|
| X | CN 107113702 A (MITSUBISHI ELECTRIC CORPORATION) 29 August 2017 (29.08.2017), description, paragraphs [0475]-[0546], and figures 21-24 | 1-30 |
| A | CN 105247929 A (QUALCOMM INCORPORATED) 13 January 2016 (13.01.2016), entire document | 1-30 |
| A | CN 102883461 A (HUAWEI TECHNOLOGIES CO., LTD.) 16 January 2013 (16.01.2013), entire document | 1-30 |
| A | CN 106576325 A (QUALCOMM INCORPORATED) 19 April 2017 (19.04.2017), entire document | 1-30 |
| A | WO 2016137948 A8 (QCOM QUALCOMM INC.) 14 September 2017 (14.09.2017), entire document | 1-30 |

☐ Further documents are listed in the continuation of Box C.     ☒ See patent family annex.

| | |
|---|---|
| *    Special categories of cited documents:<br><br>"A"   document defining the general state of the art which is not considered to be of particular relevance<br><br>"E"   earlier application or patent but published on or after the international filing date<br><br>"L"   document which may throw doubts on priority claim(s) or which is cited to establish the publication date of another citation or other special reason (as specified)<br><br>"O"   document referring to an oral disclosure, use, exhibition or other means<br><br>"P"   document published prior to the international filing date but later than the priority date claimed | "T"   later document published after the international filing date or priority date and not in conflict with the application but cited to understand the principle or theory underlying the invention<br><br>"X"   document of particular relevance; the claimed invention cannot be considered novel or cannot be considered to involve an inventive step when the document is taken alone<br><br>"Y"   document of particular relevance; the claimed invention cannot be considered to involve an inventive step when the document is combined with one or more other such documents, such combination being obvious to a person skilled in the art<br><br>"&" document member of the same patent family |

| Date of the actual completion of the international search | Date of mailing of the international search report |
|---|---|
| 25 June 2018 | 09 July 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>        BAI, Xiumei<br><br>Telephone No. (86-10) 62412035 |

Form PCT/ISA /210 (second sheet) (July 2009)

## INTERNATIONAL SEARCH REPORT
### Information on patent family members

International application No.

PCT/CN2017/107541

| Patent Documents referred in the Report | Publication Date | Patent Family | Publication Date |
|---|---|---|---|
| CN 107113702 A | 29 August 2017 | US 2018007733 A1 | 04 January 2018 |
| | | WO 2016114215 A1 | 21 July 2016 |
| | | EP 3247153 A1 | 22 November 2017 |
| | | JP WO2016114215 A1 | 19 October 2017 |
| CN 105247929 A | 13 January 2016 | PH 12015502566 B1 | 29 February 2016 |
| | | UA 116803 C2 | 10 May 2018 |
| | | JP 6239738 B2 | 29 November 2017 |
| | | KR 101778185 B1 | 13 September 2017 |
| | | RU 2015154448 A | 26 June 2017 |
| | | IL 242222 A | 31 October 2017 |
| | | EP 3000252 A2 | 30 March 2016 |
| | | JP 2016524854 A | 18 August 2016 |
| | | JP 2016520270 A | 11 July 2016 |
| | | SG 11201508468U A | 30 December 2015 |
| | | CA 2909640 A1 | 27 November 2014 |
| | | KR 20160010482 A | 27 January 2016 |
| | | AU 2014268759 A1 | 24 December 2015 |
| | | SG 11201508470P A | 30 December 2015 |
| | | RU 2015154448 A3 | 28 April 2018 |
| | | AU 2018201816 A1 | 12 April 2018 |
| | | AU 2014268765 B2 | 07 December 2017 |
| | | US 2014341035 A1 | 20 November 2014 |
| | | JP 2016526329 A | 01 September 2016 |
| | | JP 2016524400 A | 12 August 2016 |
| | | KR 20160010586 A | 27 January 2016 |
| | | US 2014341053 A1 | 20 November 2014 |
| | | CA 2909638 A1 | 27 November 2014 |
| | | WO 2014189916 A3 | 16 April 2015 |

Form PCT/ISA /210 (patent family annex) (July 2009)

**EP 3 691 369 A1**

## INTERNATIONAL SEARCH REPORT
### Information on patent family members

| International application No. |
| --- |
| PCT/CN2017/107541 |

| Patent Documents referred in the Report | Publication Date | Patent Family | Publication Date |
| --- | --- | --- | --- |
| | | AU 2014268764 B2 | 01 March 2018 |
| | | RU 2640736 C2 | 11 January 2018 |
| | | JP 6297677 B2 | 20 March 2018 |
| | | RU 2015149620 A | 26 June 2017 |
| | | JP 2016522641 A | 28 July 2016 |
| | | CN 105309033 A | 03 February 2016 |
| | | WO 2014189915 A3 | 19 March 2015 |
| | | US 2014341018 A1 | 20 November 2014 |
| | | US 2014341135 A1 | 20 November 2014 |
| | | SG 11201508490X A | 30 December 2015 |
| | | KR 20160010480 A | 27 January 2016 |
| | | WO 2014189916 A2 | 27 November 2014 |
| | | EP 3000279 A2 | 30 March 2016 |
| | | AU 2014268763 B2 | 22 March 2018 |
| | | US 9723516 B2 | 01 August 2017 |
| | | IL 242180 A | 29 March 2018 |
| | | CN 105284173 A | 27 January 2016 |
| | | US 2016381567 A1 | 29 December 2016 |
| | | SG 11201508472Q A | 30 December 2015 |
| | | PH 12015502519 A1 | 29 February 2016 |
| | | WO 2014189915 A2 | 27 November 2014 |
| | | RU 2653604 C2 | 11 May 2018 |
| | | BR 112015029169 A2 | 25 July 2017 |
| | | AU 2014268759 B2 | 15 February 2018 |
| | | RU 2015154107 A | 26 June 2017 |
| | | SG 11201508385S A | 30 December 2015 |
| CN 102883461 A | 16 January 2013 | US 9532382 B2 | 27 December 2016 |
| | | US 2015195855 A1 | 09 July 2015 |

Form PCT/ISA/210 (patent family annex) (July 2009)

## INTERNATIONAL SEARCH REPORT
### Information on patent family members

| International application No. |
|---|
| PCT/CN2017/107541 |

| Patent Documents referred in the Report | Publication Date | Patent Family | Publication Date |
|---|---|---|---|
| CN 106576325 A | 19 April 2017 | EP 2887752 A1 | 24 June 2015 |
| | | CN 102883461 B | 08 June 2016 |
| | | EP 2887752 A4 | 22 July 2015 |
| | | WO 2014044214 A1 | 27 March 2014 |
| | | EP 2887752 B1 | 27 April 2016 |
| | | JP 2017524310 A | 24 August 2017 |
| | | US 2016057731 A1 | 25 February 2016 |
| | | US 9769789 B2 | 19 September 2017 |
| | | AU 2015303888 A1 | 09 February 2017 |
| | | KR 20180027630 A | 14 March 2018 |
| | | KR 101836390 B1 | 09 March 2018 |
| | | WO 2016028505 A1 | 25 February 2016 |

Form PCT/ISA /210 (patent family annex) (July 2009)